# EUROPEAN PATENT SPECIFICATION

(11) **EP 1 494 396 B1**
(45) Date of publication and mention of the grant of the patent: **16.01.2008**
(21) Application number: 03715490.3
(22) Date of filing: 27.03.2003
(51) Int. Cl.: H04L 29/12, H04L 12/28

(54) **LAN adapter**
LAN-Adapter
Adapteur de réseau local

(30) Priority: 29.03.2002 JP 2002096469
(43) Date of publication of application: 05.01.2005
(73) Proprietor: MATSUSHITA ELECTRIC INDUSTRIAL CO., LTD, Kadoma-shi, Osaka 571-8501 (JP)
(72) Inventor: MIYAHARA, Kazuhiro, Ibaraki-shi, Osaka 567-0868 (JP); HIROSE, Koji, Hirakata-shi, Osaka 573-1122 (JP)
(74) Representative: Eisenführ, Speiser & Partner
(86) International application number: PCT/JP2003/003810
(87) International publication number: WO 2003/084139

(56) References cited:
- JP-A- 5 300 152
- JP-A- 6 164 676
- JP-A- 8 251 217
- JP-A- 2000 069 083
- US-A- 5 675 571
- US-A- 5 712 852
- US-A- 5 724 510
- US-A- 5 745 699

## Description

### BACKGROUND OF THE INVENTION

### 1. Field of the Invention

The present invention relates to a LAN adapter for connecting an information appliance to an Ethernet (R) or other local area network (LAN).

### 2. Description of the Background Art

Even residential users can now access the Internet using a number of different broadband network connections, including xDSL, optical fiber, and cable. This infrastructure has made it possible to control AV equipment, lighting, and heating and cooling systems in the home over the Internet (referred to below as an IP communications network). A LAN adapter is needed to connect these devices (information appliances) to an IP communications network.

It is also necessary to set required communications parameters in order to connect this LAN adapter to the network. These communication parameters are parameters required to connect the LAN adapter to the LAN, and include the user ID, password, IP (Internet protocol) address, whether the IP address is automatically assigned using dynamic host configuration protocol (DHCP) (referred to below as the DHCP setting), and the type of information appliance connected by the LAN adapter.

The communication parameters are generally set in the LAN adapter by using a personal computer connected to the same LAN as the LAN adapter to change the parameters. This requires specifying the known local IP address of the LAN adapter. Using a global IP address instead of a local IP address to set the communication parameters is a security risk because the communication parameters can be changed from a terminal not on the LAN. The communication parameters are therefore normally set using only the local IP address of the device on the local area network.

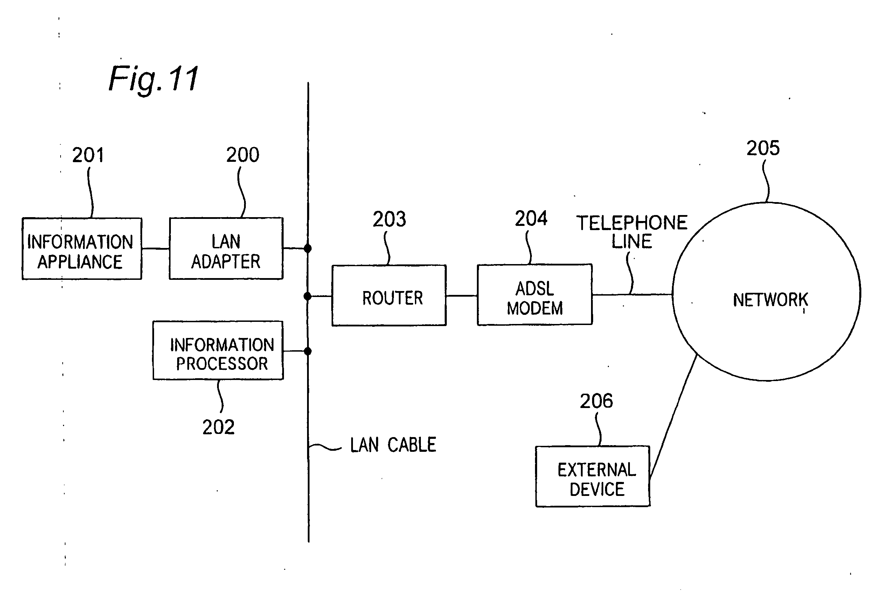

A conventional LAN adapter is described further below with reference to Fig. 11 to Fig. 15.

Fig. 11 is a schematic block diagram of a conventional LAN adapter 200 connected to a network 205. This LAN adapter 200 is connected to an information appliance 201 such as a VCR or television, and is connected through a LAN port to a LAN cable in the LAN. Included in the LAN shown in Fig. 11 are an ADSL modem 204, router 203, information processor 202, LAN adapter 200, and information appliance 201. The information processor 202 is typically a personal computer. The LAN is connected to the Internet or other wide area network 205 via a telephone line, for example, and can communicate via the network 205 with a personal computer, a portable data terminal, or other external device 206.

The information appliance 201 can be accessed and operated by an information processor 202 on the LAN through the LAN adapter 200 under predefined conditions. It can also be accessed and operated from an external device 206 connected to the network 205 to which the LAN is connected by means of the router 203 and network 205. Conversely, the information appliance 201 can also access and operate the information processor 202 on the LAN by way of the LAN adapter 200 under predefined conditions, and can access and operate an external device 206 not on the LAN by way of network 205 and router 203.

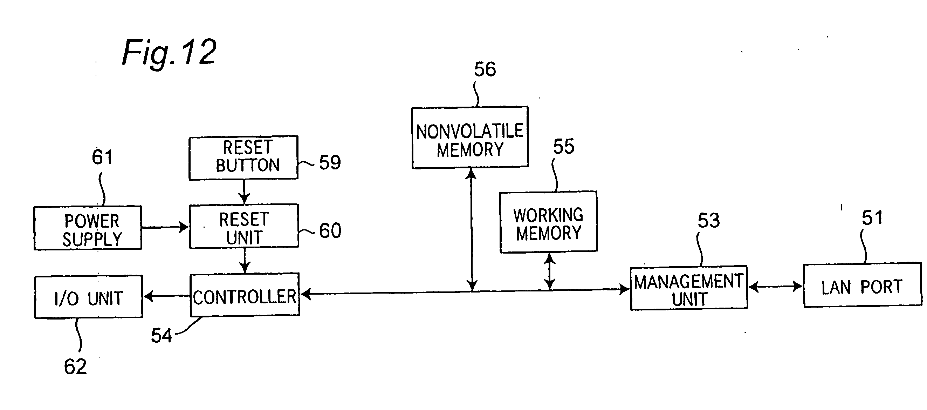

Fig. 12 is a block diagram showing the configuration of a conventional LAN adapter 200. This LAN adapter 200 connects to the LAN either wirelessly or by a wired connection through LAN port 51. The LAN adapter 200 also has working memory 55 and nonvolatile memory 56. The working memory 55 stores LAN adapter 200 settings and information about the settings of the information processor 202 and router 203 on the LAN. The nonvolatile memory 56 is typically flash memory, which is readable and writable. The IP address written to working memory 55 is used as the IP address of the LAN adapter 200 on the LAN.

The LAN adapter 200 also has a management unit 53, controller 54, reset button 59, reset unit 60, power supply 61, and input/output (I/O) unit 62. The management unit 53 enables communication over the LAN, and is the management means for managing the settings of the LAN adapter 200, and information relating to the settings of the information processor 202 and router 203, external devices connected to the LAN. The controller 54 is a control means for controlling the management unit 53, working memory 55, and nonvolatile memory 56, and controlling communication with the information appliance 201. When the reset button 59 is pressed, the reset unit 60 issues a signal for clearing the working memory 55. The power supply 61 is the power supply for the LAN adapter 200, and operates the reset unit 60 by turning the power supply off and then on again. The I/O unit 62 is the input/output means connected to the information appliance 201.

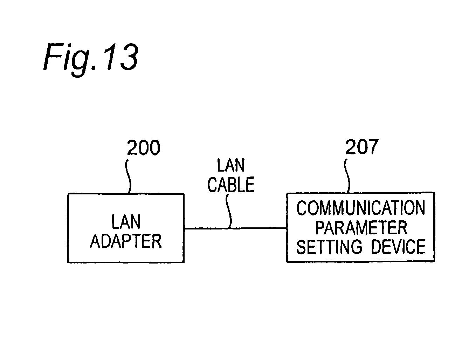

Fig. 13 is a block diagram showing a connection for setting the communication parameters in order to connect a LAN adapter 200 to the LAN. This is generally done by connecting the LAN adapter 200 with a communication parameter setting device 207 using a LAN cable to set the communication parameters. The communication parameter setting device 207 in this case is a personal computer, cell phone, or other device enabling electronic data processing.

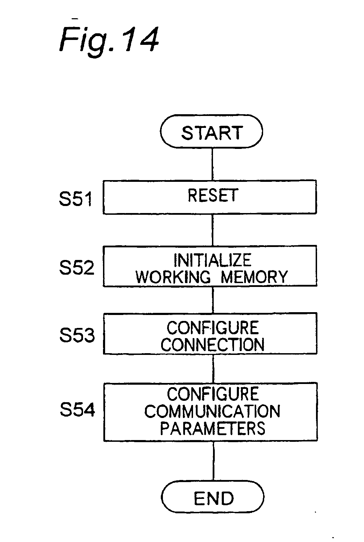

Fig. 14 is a flow chart showing the operation for setting the communication parameters of the LAN adapter 200-(referred to as the communication parameter configuration below) after the LAN adapter 200 and communication parameter setting device 207 are connected via a LAN cable as shown in Fig. 13. This method is used to configure the communication parameters for connecting a LAN adapter 200 to the LAN when the user knows the IP address stored in the nonvolatile memory 56 of the LAN adapter 200.
(a) The reset unit 60 sends a command to the controller 54 for clearing the working memory 55 when the user presses the reset button 59, for example (S51: reset step).
(b) The controller 54 reads and writes the communication parameters stored in nonvolatile memory 56 to working memory 55 (S52: working memory initialization step).
(c) Communication between the LAN adapter 200 and communication parameter setting device 207 is enabled by setting the IP address of the LAN adapter 200 using the communication parameter setting device 207 (S53: connection configuration step).
(d) The communication parameter setting device 207 is then used to write and set the communication parameters in nonvolatile memory 56 of LAN adapter 200 (S54: communication parameter configuration step).

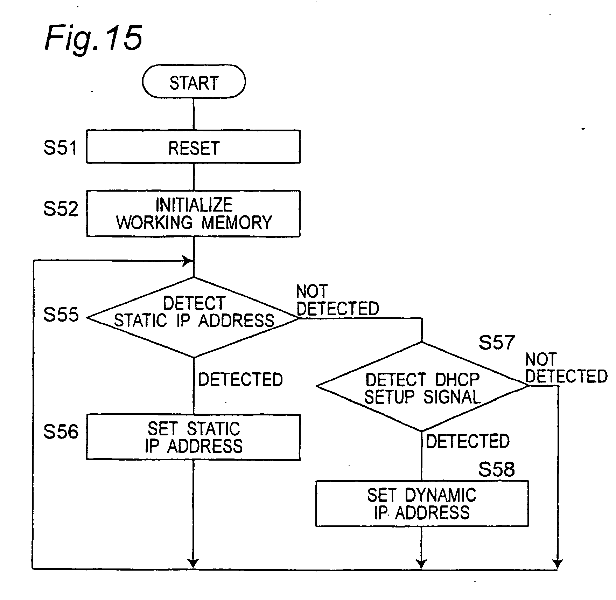

Fig. 15 is a flow chart for rewriting the IP address of the LAN adapter 200 from an information processor 202, i.e., a device on the LAN, when the conventional LAN adapter 200 is connected to the LAN as shown in Fig. 11. This method enables using the LAN adapter 200 on the LAN when the appropriate communication parameters are stored in nonvolatile memory 56 and normal communication is possible on the LAN shown in Fig. 11.
(a) The user presses the reset button 59 so that the reset unit 60 sends a reset command to the controller 54. (S51: reset step)
(b) The controller 54 reads and writes the communication parameters stored in nonvolatile memory 56 to working memory 55 (S52: working memory initialization step).
(c) The controller 54 detects the static IP address signal from the information processor 202 (S55: static IP address detection step).
(d) When the controller 54 detects the static IP address signal in the static IP address detection step S55, it writes the static IP address to working memory 55 and nonvolatile memory 56 (S56: static IP address storage step).
(e) The controller 54 detects a signal indicating whether DHCP should be used (DHCP setup signal) (S57: DHCP setup signal detection step).
(f) If the DHCP setup signal is detected in the DHCP setup signal detection step S57, the DHCP setup parameter is set in working memory 55 and nonvolatile memory 56 to use the DHCP function of the router 203 (S58: dynamic IP configuration step).

By forming a loop returning to before the static IP address detection step S55 after the static IP address storage step S56, DHCP setup signal detection step S57, or dynamic IP configuration step S58, the system waits for the static IP address signal and DHCP address signal. The LAN adapter 200 can then be used on the LAN.

US 5,724,510 discloses a local area network test instrument for detecting duplicate internet protocol addresses without disrupting the local area network connection. Accordingly, the test instrument provides a method of choosing an IP address by use of a series of network broadcasts to elicit responses from a many nodes on the network as possible. A database of the various nodes is collected and the newly arriving responses are dynamically compared with the responses already in the data base. Separate entries in the data base for devices with duplicate IP addresses are maintained and displayed to the user of the local area network test instrument to selectively and reliably communicate with the devices having duplicate IP addresses for diagnosis and correction.

US 5,745,699 relates to a dynamic address assignment in an arbitrarily connected network. Accordingly, a method and an apparatus is disclosed for assigning a unique network address to a first node within a network which is arbitrarily connected. The first node may include a shared network resource, such as a network printer device or a modem in addition to a stand alone computer system. A first provisional network address for use in assigning the unique network address is determined by the first node. The first node broadcasts probes containing the provisional network address until a first probe response to one of the probes is received or a first interval of time elapses. When the first probe response to one of the probes is received, then the first probe determines a second provisional network address and repeats selection of the address and broadcasting, until no probe response is received in the first interval of time. Using the first provisional network address, the first node broadcasts forward probes in the network until a second probe response to one of the forward probes is received by the first node or a second period of time has to be inspired.

US 5,712,852 relates to a D2B device station address initialisation that starts with a stored address. Accordingly, a single general communication bus system is disclosed providing stations which communicate with each other over a bus. Each of the stations is available over a unique address that is initialised during a system initialisation. In order to facilitate initialisation, a manufacturer-determined address is stored in a non-volatile memory. Search for a unique address for each station begins with the address stored in the non-volatile memory.

US 5,675,571 discloses a similar principle as disclosed in US 5,712,852. In US 5,675,571, the problem of simultaneous initialisation of two or more devices is addressed. Accordingly, when two or more devices are initialised simultaneously, they may have the same address for a certain time. Accordingly, all devices are set to a dummy address and start checking the net for devices having its own installed address. After 3 tries, the stored address is used. If other devices having the installed address are found, the own installed address is slightly changed.

### SUMMARY OF THE INVENTION

A problem with the configuration described above is that there is no display unit for displaying the IP address stored to working memory 55 and nonvolatile memory 56. This means that if the user of the information processor 202 does not know the IP address stored to working memory 55 or nonvolatile memory 56, there is no way for the user of the information processor 202 to learn the IP address. The problem here is that it may not be possible to restore access to the LAN adapter 200 from another LAN device.

Furthermore, because the IP address can only be set from an external device connected through LAN port 51, it would be sufficient to reset the IP address from such an external device to enable use on the LAN. However, in order to operate the LAN adapter from an external device, the LAN adapter 200 must first be accessed from the external device and this requires knowing the IP address of the LAN adapter 200. If the user does not know the IP address of the LAN adapter 200 in this case the LAN adapter 200 cannot be accessed and the IP address therefore cannot be reset. If the user sets a static IP address as the IP address of each device on the LAN, it is difficult for the user to know the IP address each time an address is changed and the user of the information processor 202 may not know the IP address stored to the working memory 55 and nonvolatile memory 56 of the LAN adapter 200.

Furthermore, when the LAN adapter 200 is set to use DHCP, the IP address is automatically assigned by the router 203, and external devices can only access the LAN adapter 200 through the router 203. However, if the DHCP function of the router 203 is not operating normally, access to the LAN adapter 200 cannot be restored because the IP address of the LAN adapter 200 cannot be set directly from the external device.

The present invention is therefore directed to providing a LAN adapter as defined in claim 1 for restoring a LAN connection when desired by the user even if the IP address of the LAN adapter is not known.

Furthermore is provided an information appliance as defined in claim 7 and a method as defined in claim 8.

The LAN adapter thus comprised can therefore restore a connection on the LAN even when the user does not know the IP address of the LAN adapter.

### BRIEF DESCRIPTION OF THE DRAWINGS

The object, features, and benefits of the present invention will be apparent from the preferred embodiments described below in conjunction with the accompanying figures:
Fig. 1 is a block diagram of the connection of a LAN adapter according to a first embodiment of the present invention to a LAN;
Fig. 2 is a block diagram of the configuration of an information appliance according to a first embodiment of the present invention when connected to a LAN;
Fig. 3 is a block diagram of the configuration of a LAN adapter according to a first embodiment of the present invention;
Fig. 4 is a block diagram of the connection enabling setting the communication parameters of a LAN adapter according to a first embodiment of the present invention;
Fig. 5 is a flow chart of the operation for setting the communication parameters of a LAN adapter according to a first embodiment of the present invention;
Fig. 6 is a flow chart of initializing the IP address of a LAN adapter according to a first embodiment of the present invention;
Fig. 7 is a flow chart of operation of the reset unit of a LAN adapter according to a first embodiment of the present invention;
Fig. 8 is a flow chart of a method for setting the IP address when a LAN adapter according to a first embodiment of the present invention is connected to a LAN;
Fig. 9 is a block diagram of the configuration of a LAN adapter according to a second embodiment of the present invention;
Fig. 10 is a flow chart of initializing the IP address of a LAN adapter according to a second embodiment of the present invention;
Fig. 11 is a block diagram of the connection of a LAN adapter according to the prior-art when connected to a LAN;
Fig. 12 is a block diagram of the configuration of a conventional LAN adapter;
Fig. 13 is a block diagram of the connection for setting the communication parameters of a conventional LAN adapter;
Fig. 14 is a flow chart of setting the communication parameters of a conventional LAN adapter; and
Fig. 15 is a flow chart of the operation of a conventional LAN adapter.

### DETAILED DESCRIPTION OF THE INVENTION

A LAN adapter according to a preferred embodiment of the present invention is described below with reference to the accompanying figures. It should be noted that functionally like parts are identified by the same reference numerals in the figures.

### (Embodiment 1)

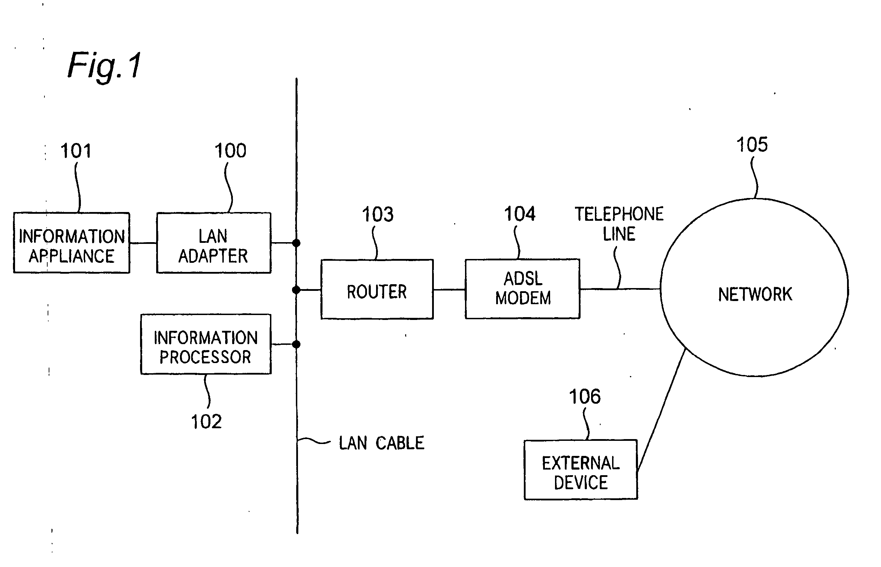

Fig. 1 is a block diagram of a LAN adapter according to a first embodiment of the present invention connected to a network. This LAN adapter 100 is connected to a video recorder, camera, television, or other information appliance 101, and is connected through a LAN port to a LAN cable on the local area network. Of the devices shown in the figure, the ADSL modem 104, router 103, personal computer or other information processor 102, LAN adapter 100, and information appliance 101 form a LAN. This LAN is further connected to a network 105 such as the Internet by way of a telephone line, and is also connected through the network 105 to a personal computer, cell phone, portable data terminal, or other external device 106. The information appliance 101 is accessible and operable by an information processor 102 on the LAN through the LAN adapter 100 under specific conditions. The information appliance 101 can also be accessed and operated through the network 105 and router 103 from an external device 106 connected to a network 105 other than the LAN. Conversely, the information appliance 101 can also access and operate an information processor 102 on the LAN through the LAN adapter 100 under specific conditions. Furthermore, the information appliance 101 can also access and operate a external device 106 that is not on the LAN through the network 105 and router 103.

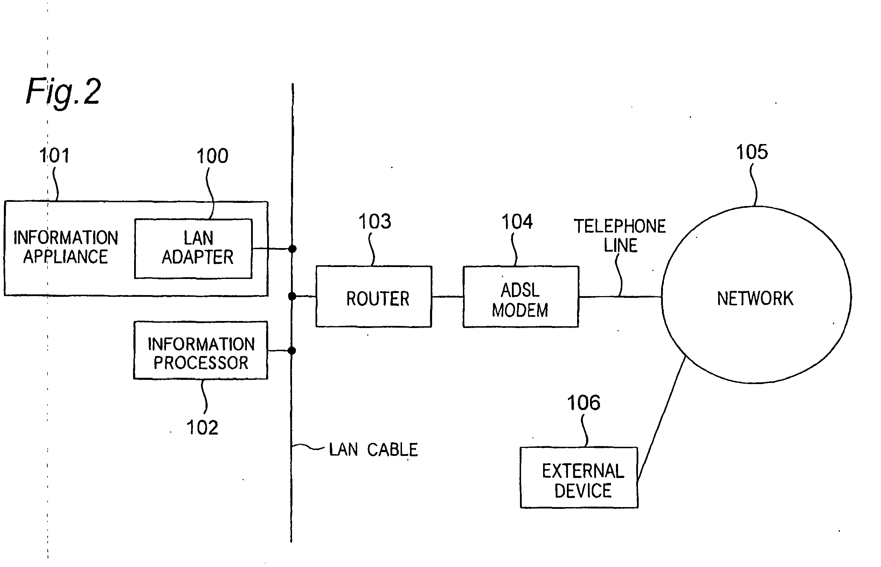

Fig. 2 is a block diagram of how an information appliance 101 containing a LAN adapter 100 connects to the network 105. By incorporating the LAN adapter 100 inside the information appliance 101, the LAN adapter 100 is easier to handle than when it is separate.

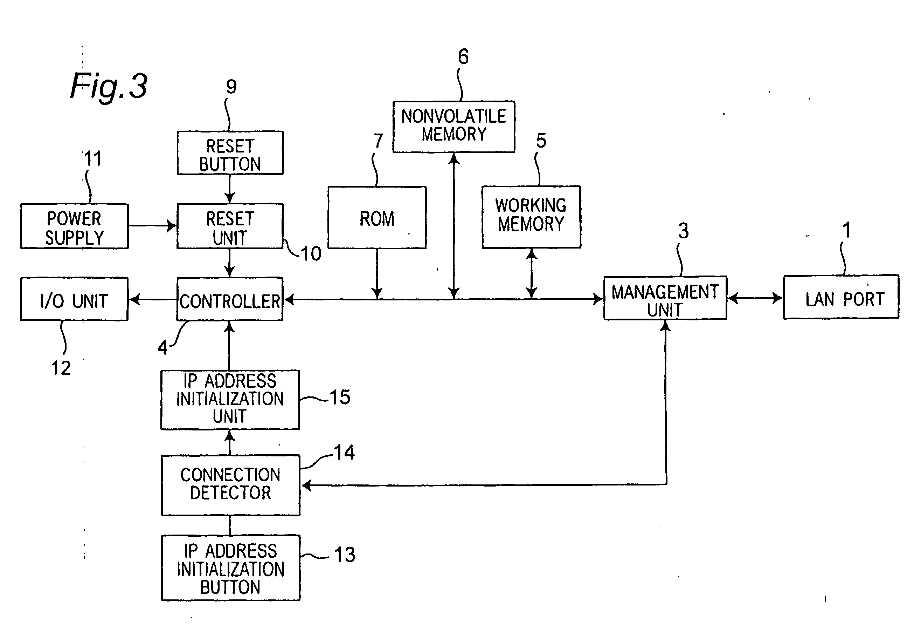

Fig. 3 is a block diagram of the configuration of a LAN adapter according to a first embodiment of the present invention. This LAN adapter 100 is connected wirelessly or by wire to a LAN through LAN port 1, and has working memory 5, nonvolatile memory 6, and ROM (read-only memory) 7. The working memory 5 stores information about the settings of the LAN adapter 100 and the settings of the router 103 and information processor 102 connected to the LAN. The nonvolatile memory 6 is readable/writable flash memory, for example. ROM 7 stores a predefined default IP address for the LAN adapter 100, and is a ROM device used as a second storage device that can only be read and cannot be written.

LAN adapter 100 also has management unit 3, controller 4, reset button 9, reset unit 10, power supply 11, and I/O unit 12. The management unit 3 enables LAN communications, and is the management means for managing information relating to the settings of the LAN adapter and the settings of the router 103 and information processor 102 as external devices connected over the LAN.

The controller 4 controls the management unit 3, working memory 5, nonvolatile memory 6, and ROM 7, and controls communication with the information appliance 101.

When the reset button 9 is depressed, reset unit 10 issues a command for clearing the working memory 5.

The power supply 11 is the power supply unit of the LAN adapter 100, and operates the reset unit 10 by turning the power on again after turning it off.

The I/O unit 12 is the input/output means connected to the information appliance 101.

The LAN adapter 100 also has an IP address initialization button 13, connection detector 14, and IP address initialization unit 15. When the IP address initialization button 13 is depressed, the connection detector 14 determines whether there is another device on the LAN connected to the LAN adapter 100. If it is determined that there is no device on the LAN connected to the LAN adapter 100, the IP address initialization unit 15 issues an IP address initialization command for setting the IP address of the LAN adapter 100 to the default IP address stored in ROM 7. More specifically, working memory 5 is cleared and the default IP address stored in ROM 7 is written through nonvolatile memory 6 to working memory 5.

However, if it is determined that another device on the LAN is connected to the LAN adapter 100, working memory 5 is cleared and the content of nonvolatile memory 6 is written to working memory 5. Because the IP address currently recognized as the address of the LAN adapter on the LAN is stored to nonvolatile memory 6 in this case, the current IP address is written to the working memory 5. The IP address is therefore not initialized in this case. By thus confirming whether a device is connected to the LAN adapter over the LAN, interrupted connections caused by the IP address of the LAN adapter 100 changing when another device has accessed the LAN adapter 100 can be prevented.

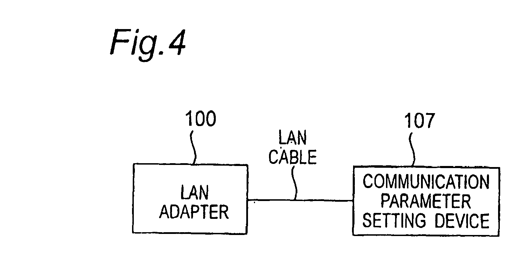

Fig. 4 is a block diagram of a connection for setting the communication parameters, for example, when connecting this LAN adapter 100 to the LAN. This is generally done by connecting the LAN adapter 100 and communication parameter setting device 107 by a LAN cable and then setting the communication parameters for the LAN adapter 100. The communication parameter setting device 107 in this case is a personal computer, cell phone, or other device enabling electronic data processing.

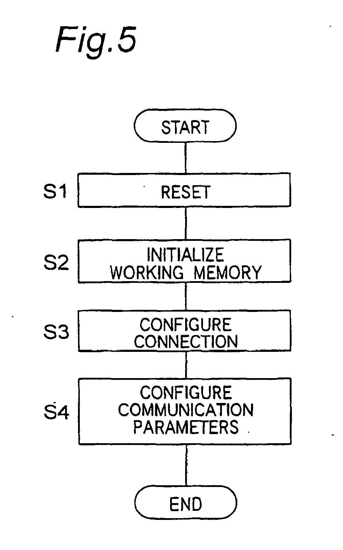

Fig. 5 is a flow chart of the operation for setting the communication parameters of the LAN adapter 100 (referred to as the communication parameter configuration below) after the LAN adapter 100 and communication parameter setting device 107 are connected via a LAN cable as shown in Fig. 4. This method is used to configure the communication parameters for connecting a LAN adapter 100 to the LAN when the user knows the IP address stored in the nonvolatile memory 6 of the LAN adapter 100.
(a) The reset unit 10 sends a command to the controller 4 for clearing the working memory 5 when the user presses the reset button 9, for example. (S1: reset step)
(b) The controller 4 reads and writes the communication parameters stored in nonvolatile memory 6 to working memory 5 (S2: working memory initialization step).
(c) Communication between the LAN adapter 100 and communication parameter setting device 107 is enabled by setting the IP address of the LAN adapter 100 using the communication parameter setting device 107 (S3: connection configuration step).
(d) The communication parameter setting device 107 is then used to write and set the communication parameters in nonvolatile memory 6 of LAN adapter 100 (S4: communication parameter configuration step).

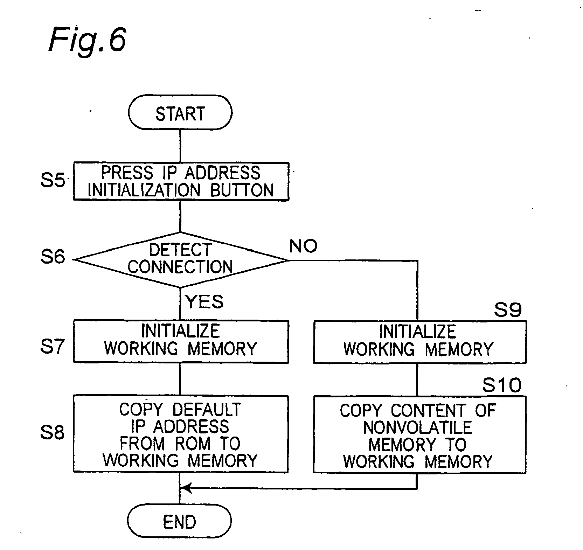

Fig. 6 is a flow chart of an operation for setting the IP address of the LAN adapter 100 to the default IP address. This method is used to set the communication parameters when the user does not know the current IP address of the LAN adapter 100 stored in nonvolatile memory 6.
(a) When the user presses the IP address initialization button 13, the controller 4 detects that the button 13 was pressed (S5: IP address initialization button depression step):
(b) The connection detector 14 detects whether there is a device on the LAN connected to the LAN adapter 100 (S6: connection detection step).
(c) If the connection detector 14 determines that there is no device on the LAN connected to the LAN adapter 100 (yes), working memory 5 is cleared by the controller 4 (S7: working memory initialization step).
(d) After the working memory 5 is initialized, the default IP address stored in ROM 7 is written to nonvolatile memory 6, and the content of nonvolatile memory 6 is then written to working memory 5 (S8: default IP address writing step). This "default IP address" means the IP address stored in ROM 7. Writing this default IP address to working memory 5 enables the known IP address of the LAN adapter 100 to be used when setting the communication parameters. It should be noted that the first storage device comprises working memory 5 and nonvolatile memory 6.
(e) If the connection detector 14 determines that there is a device on the LAN connected to LAN adapter 100 (no), working memory 5 is cleared by controller 4 (S9: working memory initialization step).
(f) After initializing the working memory 5, the content of nonvolatile memory 6 is written to working memory 5 (S10: write content of nonvolatile memory step). The IP address of the LAN adapter 100 is not initialized in this case. If the IP address is changed when there is already a device on the LAN connected to the LAN adapter 100, the LAN adapter 100 will no longer be recognized by that device. This problem can be prevented, however, by writing the current IP address when another device is known to be connected to the LAN adapter 100.

The above method for detecting a connection is described next. If the network connection is, for example, a 10BASE-T connection conforming to IEEE 802.3, devices connected over the network are found by checking at the physical layer (or the physical layer IC device level). This makes it possible to know that a connected device is not on the network. It will be obvious that the connection detection method shall not be so limited. The connection detection method will vary according to the network connection type, such as a wired LAN or wireless LAN, and the detection method will vary according to the type of network connection used.

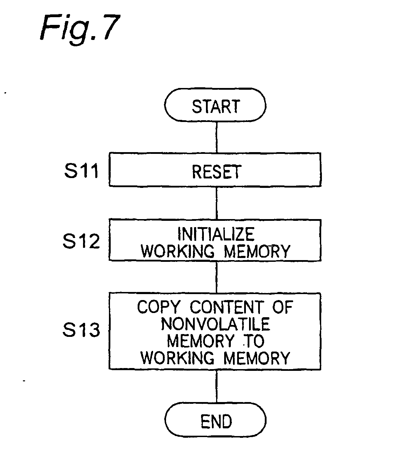

Fig. 7 is a flow chart of operation when the reset button 9 is pressed or when the power supply 11 is turned on from an off state.
(a) The reset unit 10 detects whether the reset button 9 was pressed or whether the supply of power to the power supply 11 started (S11: reset step).
(b) The reset unit 10 outputs a reset signal instructing the controller 4 to clear working memory 5, and the controller 4 thus clears working memory 5 (S12: working memory initialization step). The reset means comprises the reset unit 10, reset button 9, and power supply 11.
(c) The reset signal from the reset unit 10 also causes the controller 4 to write the content of nonvolatile memory 6 to working memory 5 (S13: write content of nonvolatile memory step). Note that the currently recognized IP address of the LAN adapter 100 on the LAN is stored to nonvolatile memory 6. The IP address written to the working memory 5 is the IP address of the LAN adapter 100 on the LAN.

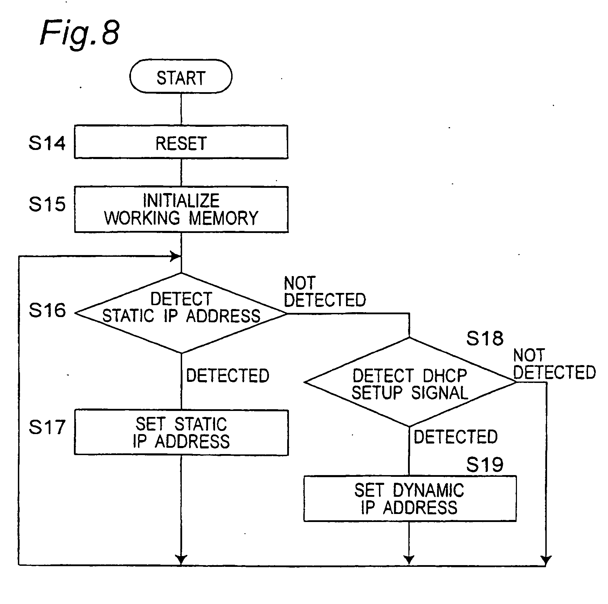

Fig. 8 is a flow chart of the operation for rewriting the IP address of the LAN adapter 100 from the information processor 102, a device on the LAN, when the LAN adapter 100 is connected to the LAN as shown in Fig. 1. This method enables the LAN adapter to be used on the LAN when the communication parameters stored to nonvolatile memory 6 are appropriate and normal communication is possible on the LAN configured as shown in Fig. 1.
(a) The user operates the reset button 9 so that a reset signal is output from the reset unit 10 to the controller 4 (S14: reset step).
(b) The controller 4 reads and writes the communication parameters stored in nonvolatile memory 6 to working memory 5 (S15: working memory initialization step).
(c) The controller 4 detects the static IP address signal from the information processor 102 (S16: static IP address detection step).
(d) If the controller 4 detects the static IP address signal in the static IP address detection step S16, it writes the static IP address to working memory 5 and nonvolatile memory 6 (S17: static IP address writing step).
(e) The controller 4 then detects a signal (referred to below as the DHCP setup signal) indicating whether DHCP should be used (S18: DHCP setup signal detection step).
(f) If the DHCP setup signal is detected in the DHCP setup signal detection step S18, a flag indicating using the DHCP function of the router 103 is set and written to working memory 5 and nonvolatile memory 6 (S19: dynamic IP setup step).

By forming a loop returning to before the static IP address detection step S16 after the static IP address writing step S17, DHCP setup signal detection step S18, and dynamic IP setup step S19, the system waits for the static IP address signal and DHCP setup signal. The LAN adapter 100 can thus be used on the LAN.

Even if the user connects a LAN adapter 100 to a LAN and attempts to initialize the IP address of the LAN adapter 100 while the LAN adapter 100 can communicate with other devices on the network, the IP address will not be initialized with this first embodiment of the invention if it is confirmed in the connection detection step S6 that there is a device on the LAN connected to the LAN adapter 100. More specifically, the connection detector 14 detects information from the management unit 3 relating to the connection of the LAN adapter 100 on the LAN, and confirms that there is a connection by communicating with the LAN adapter 100 over the LAN. If there is a connected device, the IP address initialization unit 15 initializes the working memory 5 and then writes the content of nonvolatile memory 6 to working memory 5, and the IP address is not initialized. In other words, the IP address of the LAN adapter 100 is not changed. As a result, problems with the LAN communication system including LAN adapter 100 that can occur when the IP address of the LAN adapter 100 is changed while the LAN adapter 100 is communicating with another device can be prevented.

### (Embodiment 2)

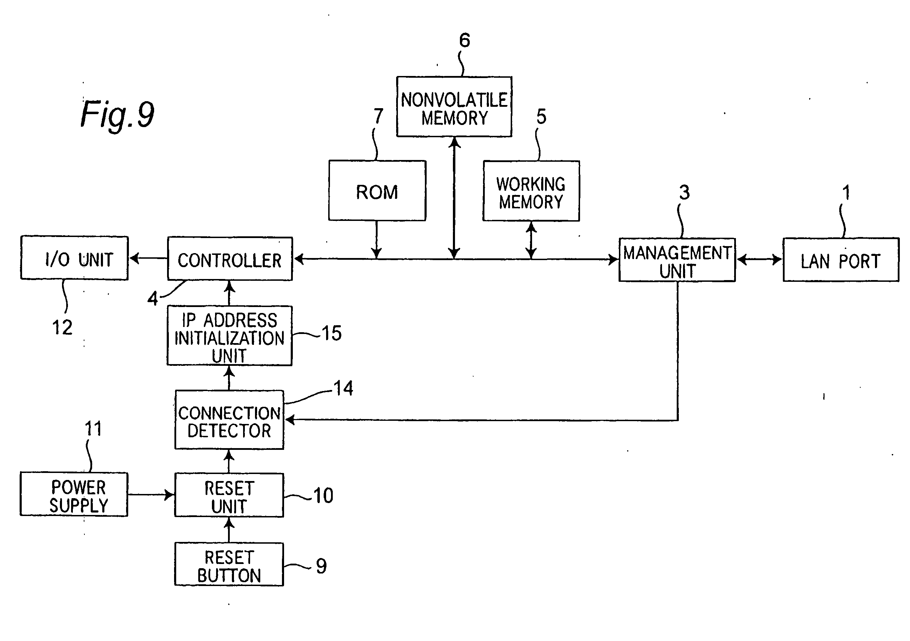

Fig. 9 is a block diagram of the configuration of a LAN adapter 100 according to a second embodiment of the present invention. This LAN adapter 100 differs from the LAN adapter of the first embodiment in that a reset means composed of reset button 9, reset unit 10, and power supply 11 is connected to the connection detector 14 instead of an IP address initialization button. This LAN adapter combines the reset button 9 and IP address initialization button 13. This simplifies construction of the LAN adapter, enables IP address initialization by starting the power supply, and improves operability for the user.

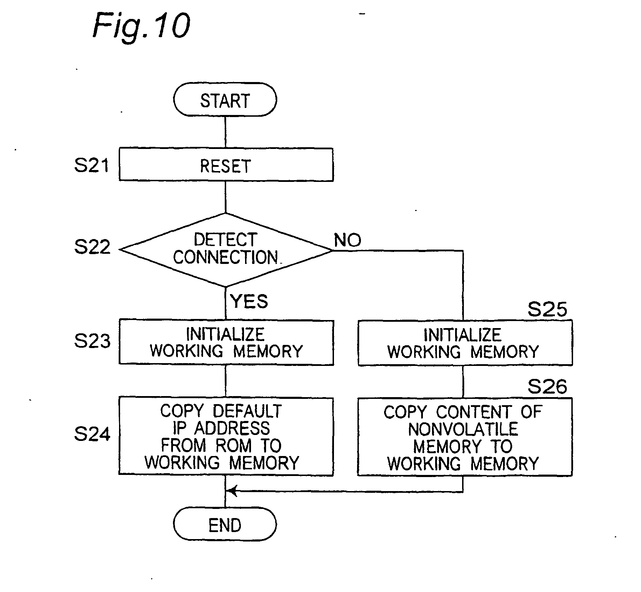

Fig. 10 is a flow chart of a method for initializing the IP address of this LAN adapter 100. This is a method for configuring the communication parameters when the user does not know the current IP address of the LAN adapter 100 stored in nonvolatile memory 6. This IP address initialization method has the following steps.
(a) The reset operation is started by the user pressing the reset button 9 or starting to supply power to the power supply 11 (S21: reset step).
(b) The connection detector 14 detects whether there is a device on the LAN connected to the LAN adapter 100 (S22: connection detection step).
(c) If the connection detector 14 determines that there is no device on the LAN connected to the LAN adapter 100 (yes), working memory 5 is cleared by the controller 4 (S23: working memory initialization step).
(d) After the working memory 5 is initialized, the default IP address stored in ROM 7 is written to nonvolatile memory 6, and the content of nonvolatile memory 6 is then written to working memory 5 (S24: default IP address writing step). This "default IP address" means the IP address stored in ROM 7. Writing this default IP address to working memory 5 enables the known IP address of the LAN adapter 100 to be used when setting the communication parameters. It should be noted that the first storage device comprises working memory 5 and nonvolatile memory 6.
(e) If the connection detector 14 determines that there is a device on the LAN connected to LAN adapter 100 (no), working memory 5 is cleared by controller 4 (S25: working memory initialization step).
(f) After initializing the working memory 5, the content of nonvolatile memory 6 is written to working memory 5 (S26: write content of nonvolatile memory step). The IP address of the LAN adapter 100 is not initialized in this case. If the IP address is changed when there is already a device on the LAN connected to the LAN adapter 100, the LAN adapter 100 will no longer be recognized by that device. This problem can be prevented, however, by writing the current IP address when another device is known to be connected to the LAN adapter 100.

As described in the first embodiment, the LAN adapter 100 according to this second embodiment can be an information appliance 101 having the LAN adapter 100 as one component thereof. Incorporating the LAN adapter 100 inside the information appliance 101 makes handling the LAN adapter 100 easier than when it is a separate device.

In the first and second embodiments described above the first storage device includes both the working memory 5 and nonvolatile memory 6, but the invention shall not be so limited and the first storage device could have only nonvolatile memory 6. That is, the IP address stored in nonvolatile memory 6 could be used directly as the IP address of the LAN adapter 100. This configuration makes the working memory 5 unnecessary, and further simplifies construction of the LAN adapter 100.

Furthermore, ROM 7 is used as the second storage device in the first and second embodiments described above, but the invention shall not be so limited and it could be flash memory or other nonvolatile memory device. More specifically, the second storage device can be any storage device capable of retaining the stored content when LAN adapter 100 power is off.

Furthermore, one LAN adapter and data processing device each are connected in addition to the router 103 to the LAN in the above first and second embodiments of the invention, but multiple LAN adapters and data processing devices could be connected to the LAN.

A LAN adapter according to the present invention thus described can thus reset the IP address of the LAN adapter to a default IP address known to the user and thereby restore the LAN connection even when the user or router does not know the currently set IP address.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A local area network adapter (100) for connecting an information appliance (101) to a local area network, comprising:
a first storage device (5, 6) for storing an IP address which is used by the active local area network adapter (100) attached to the local area network;
a second storage device (7) for storing a default IP address for the local area network adapter (100);
an IP address initialization controller (15) for locally controlling initializing the IP address of the local area network adapter (100), the local area network adapter (100) being **characterised by**:
a connection detector (14) for detecting whether there is a device on the local area network logically connected to the local area network adapter (100) in response to a command from the IP address initialization controller (15);
an IP address initialization means (13) for initializing the IP address of the local area network adapter (100) according to the connection detected by the connection detector (14); and
a controller (4) for writing the default IP address stored in the second storage device (7) to the first storage device (5, 6) as the IP address of the local area network adapter (100), when the connection detector (14) determines that there is no device on the local area network logically connected to the local area network adapter (100), and for controlling the first storage device (5, 6) and second storage device (7).

2. A local area network adapter (100) according to claim 1, wherein the first storage device comprises working memory (5) and nonvolatile memory (6), and
when the connection detector (14) determines that there is no device on the local area network logically connected to the local area network adapter (100), the controller (4) initializes the working memory, and writes the default IP address stored in the second storage device (7) to nonvolatile memory (6) as the IP address of the local area network adapter (100), then the controller (4) writes the content of the nonvolatile memory to the working memory (5).

3. A local area network adapter (100) according to claim 1, wherein the first storage device comprises working memory (5) and nonvolatile memory (6), and
when the connection detector (14) determines that there is a device on the local area network logically connected to the local area network adapter (100), the controller (4) initializes the working memory, and writes the content of the nonvolatile memory (6) to the working memory (5).

4. A local area network adapter (100) according to claim 3, wherein the local area network adapter (100) further comprises a reset means (10), and
when the reset means (10) is operated initializes the working memory (5), and writes the content of the nonvolatile memory (6) to working memory (5).

5. A local area network adapter (100) according to claim 1, wherein the second storage device (7) is ROM.

6. A local area network adapter (100) according to claim 1; wherein the local area network adapter (100) further comprises:
a local area network port (1) for connecting the local area network adapter (100) to a local area network;
management means (3) for acquiring and managing local area network information through the local area network port (1); and
input/output means (12) for connecting the local area network adapter to the information appliance (101).

7. An information appliance (101) connected to a local area network, comprising:
a first storage device (5, 6) for storing an IP address which is used by the active information appliance (101) attached to the local area network;
a second storage device (7) for storing a default IP address for the information appliance (101);
an IP address initialization controller (15) for locally controlling initializing the IP address of the information appliance (101), the information appliance (101) being **characterised by**:
a connection detector (14) for detecting whether there is a device on the local area network logically connected to the information appliance (101) in response to a command from the IP address initialization controller (15);
an IP address initialization means (13) for initializing the IP address of the information appliance (101) according to the connection detected by the connection detector (14); and
a controller (4) for writing the default IP address stored in the second storage device (7) to the first storage device (5, 6) as the IP address of the information appliance, when the connection detector (14) determines that there is no device on the local area network logically connected to the information appliance (101), and for controlling the first storage device (5, 6) and second storage device (7).

8. A method for initializing an IP address of a local area network adapter (100) connecting an information appliance to a local area network, **characterised by** the steps of:
storing an IP address which is used by the active local area network adapter (100) attached to the local area network in a first storage device (5, 6) at the side of the local area network adapter (100),
storing a default IP address for the local area network adapter (100) in a second storage device (7) at the side of the local area network adapter (100),
locally commanding (S5) initializing the IP address of the local area network adapter (100);
determining (S6) in response to said command if there is a device logically connected to the local area network adapter (100) on the local area network;
initializing the IP address of the local area network adapter (100) according to the determined connection; and
writing (S8) the default IP address stored in the second storage device (7) to the first storage device (5, 6) as the IP address of the local area network adapter (100) when it is determined that there is no device logically connected to the local area network adapter (100).

## Patentansprüche

1. Lokalnetzadapter (100) zum Verbinden eines Informationsgerätes (101) mit einem lokalen Netz mit:
einer ersten Speichervorrichtung (5, 6) zum Speichern einer IP-Adresse, die von dem aktiven Lokalnetzadapter (100), der an das lokale Netz angeschlossen ist, verwendet wird;
einer zweiten Speichervorrichtung (7) zum Speichern einer vorgegebenen IP-Adresse für den Lokalnetzadapter (100);
einer IP-Adressinitialisierungsteuereinheit (15) zum lokalen Steuern eines Initialisierens der IP-Adresse des Lokalnetzadapters (100), wobei der Lokalnetzadapter (100) **gekennzeichnet ist durch**:
eine Verbindungserfassungseinheit (14) zum Erfassen in Antwort auf einen Befehl von der IP-Adressinitialisierungssteuereinheit (15); ob es in dem lokalen Netz eine Vorrichtung gibt, die logisch mit dem Lokalnetzadapter (100) verbunden ist,
ein IP-Adressinitialisierungsmittel (13) zum Initialisieren der IP-Adresse des Lokalnetzadapters (100) gemäß der Verbindung, die **durch** die Verbindungsfassungseinheit (14) erfasst ist; und
eine Steuereinheit (4) zum Schreiben der vorgegebenen IP-Adresse, die in der zweiten Speichervorrichtung (7) gespeichert ist, als die IP-Adresse des Lokalnetzadapters (100) in die erste Speichervorrichtung (5, 6), wenn die Verbindungserfassungseinheit (14) feststellt, dass es keine Vorrichtung in dem lokalen Netz gibt, die logisch mit dem Lokalnetzadapter (100) verbunden ist, und zum Steuern der ersten Speichervorrichtung (5, 6) und der zweiten Speichervorrichtung (7).

2. Lokalnetzadapter (100) nach Anspruch 1, wobei die erste Speichervorrichtung Arbeitsspeicher (5) und nicht flüchtigen Speicher (6) aufweist, und
wobei die Steuereinheit (4) den Arbeitsspeicher initialisiert und die vorgegebene IP-Adresse, die in der zweiten Speichervorrichtung (7) gespeichert ist, als die IP-Adresse des Lokalnetzadapters (100) in den nicht flüchtigen Speicher (6) schreibt, wenn die Verbindungserfassungseinheit (14) feststellt, dass es keine Vorrichtung in dem lokalen Netz gibt, die logisch mit dem Lokalnetzadapter (100) verbunden ist, wobei dann die Steuereinheit (4) den Inhalt des nicht flüchtigen Speichers in den Arbeitsspeicher (5) schreibt.

3. Lokalnetzadapter (100) nach Anspruch 1, wobei die erste Speichervorrichtung Arbeitsspeicher (5) und nicht flüchtigen Speicher (6) aufweist, und
wobei, die Steuereinheit (4) den Arbeitsspeicher initialisiert und den Inhalt des nicht flüchtigen Speichers (6) in den Arbeitsspeicher (5) schreibt, wenn die Verbindungserfassungseinheit (14) feststellt, dass es eine Vorrichtung in dem lokalen Netz gibt, die logisch mit dem Lokalnetzadapter (100) verbunden ist.

4. Lokalnetzadapter (100) nach Anspruch 3, wobei der lokale Lokalnetzadapter (100) ferner ein Rückstellmittel (10) aufweist, und
wenn das Rückstellmittel (10) betrieben wird, es den Arbeitsspeicher (5) initialisiert und den Inhalt des nicht flüchtigen Speichers (6) in den Arbeitsspeicher (5) schreibt.

5. Lokalnetzadapter (100) nach Anspruch 1, wobei die zweite Speichervorrichtung (7) ein ROM ist.

6. Lokalnetzadapter (100) nach Anspruch 1, wobei der Lokalnetzadapter (100) ferner aufweist:
einen Lokalnetzanschluss (1) zum Verbinden des Lokalnetzadapters (100) mit einem lokalen Netz;
Verwaltungsmittel (3) zum Erfassen und Weiterleiten von Lokalnetzinformation durch den Lokalnetzanschluss (1); und
Eingabe/Ausgabemittel (12) zum Verbinden des Lokalnetzadapters mit dem Informationsgerät (101).

7. Informationsgerät (101), welches mit einem lokalen Netz verbunden ist, mit:
einer ersten Speichervorrichtung (5, 6) zum Speichern einer IP-Adresse, die von dem aktiven Informationsgerät (101), welches an das lokale Netz angeschlossen ist, verwendet wird;
einer zweiten Speichervorrichtung (7) zum Speichern einer vorgegebenen IP-Adresse für das Informationsgerät (101);
einer IP-Adressinitialisierungssteuereinheit (15) zum lokalen Steuern eines Initialisierens der IP-Adresse des Informationsgerätes (101), wobei das Informationsgerät (101) **gekennzeichnet ist durch**:
eine Verbindungserfassungseinheit (14) zum Erfassen in Antwort auf einen Befehl von der IP-Adressinitialisierungssteuereinheit (15) ob es eine Vorrichtung in dem lokalen Netz gibt, welche logisch mit dem Informationsgerät (101) verbunden ist,
ein IP-Adresseninitialisierungsmittel (13) zum Initialisieren der IP-Adresse des Informationsgerätes (101) gemäß der Verbindung, die **durch** die Verbindungserfassungseinheit (14) erfasst ist; und
eine Steuereinheit (4) zum Schreiben der vorgegebenen IP-Adresse, die in der zweiten Speichervorrichtung (7) gespeichert ist, als die IP-Adresse des Informationsgerätes in die erste Speichervorrichtung (5, 6), wenn die Verbindungserfassungseinheit (14) feststellt, dass es keine Vorrichtung in dem lokalen Netz gibt, welche logisch mit dem Informationsgerät (101) verbunden ist, und zum Steuern der ersten Speichervorrichtung (5, 6) und der zweiten Speichervorrichtung (7).

8. Ein Verfahren zum Initialisieren einer IP-Adresse eines Lokalnetzadapters (100), der ein Informationsgerät mit einem lokalen Netz verbindet, **gekennzeichnet durch** die Schritte:
Speichern einer IP-Adresse, die von dem aktiven Lokalnetzadapter (100), der an das lokale Netz angeschlossen ist, verwendet wird, in einer ersten Speichervorrichtung (5, 6) auf der Seite des Lokalnetzadapters (100),
Speichern einer vorgegebenen IP-Adresse für den Lokalnetzadapter (100) in einer zweiten Speichervorrichtung (7) auf der Seite des Lokalnetzadapters (100),
lokales Befehlen (S5) eines Initialisierens der IP-Adresse des Lokalnetzadapters (100);
Feststellen (S6) in Antwort auf diesen Befehl, ob es in dem lokalen Netz verbunden eine Vorrichtung gibt, die logisch mit dem Lokalnetzadapter (100) ist;
Initialisieren der IP-Adresse des Lokalnetzadapters (100) gemäß der festgestellten Verbindung; und
Schreiben (S8) der vorgegebenen IP-Adresse, die in der zweiten Speichervorrichtung (7) gespeichert ist, als die IP-Adresse des Lokalnetzadapters (100) in die erste Speichervorrichtung (5, 6), wenn festgestellt ist, dass es keine Vorrichtung gibt, die logisch mit dem Lokalnetzadapter (100) verbunden ist.

## Revendications

1. Adaptateur de réseau local (100) pour connecter un appareil d'information (101) à un réseau local, comprenant:
un premier dispositif de stockage (5, 6) pour stocker une adresse IP qui est utilisée par l'adaptateur de réseau local actif (100) attaché au réseau local;
un deuxième dispositif de stockage (7) pour stocker une adresse IP par défaut pour l'adaptateur de réseau local (100);
une unité de commande d'initialisation d'adresse IP (15) pour commander localement une initialisation de l'adresse IP de l'adaptateur de réseau local (100), l'adaptateur de réseau local (100) étant **caractérisé par**:
un détecteur de connexion (14) pour détecter s'il y a un dispositif sur le réseau local connecté logiquement à l'adaptateur de réseau local (100) en réponse à un ordre de l'unité de commande d'initialisation d'adresse IP (15);
un moyen d'initialisation d'adresse IP (13) pour initialiser l'adresse IP de l'adaptateur de réseau local (100) selon la connexion détectée par le détecteur de connexion (14); et
une unité de commande (4) pour écrire l'adresse IP par défaut stockée dans le deuxième dispositif de stockage (7) dans le premier dispositif de stockage (5, 6) en tant que l'adresse IP de l'adaptateur de réseau local (100), lorsque le détecteur de connexion (14) détermine qu'il n'y a aucun dispositif sur le réseau local connecté logiquement à l'adaptateur de réseau local (100), et pour commander le premier dispositif de stockage (5, 6) et le deuxième dispositif de stockage (7).

2. Adaptateur de réseau local (100) selon la revendication 1, dans lequel le premier dispositif de stockage comprend une mémoire de travail (5) et une mémoire non volatile (6), et
lorsque le détecteur de connexion (14) détermine qu'il n'y a aucun dispositif sur le réseau local connecté logiquement à l'adaptateur de réseau local (100), l'unité de commande (4) initialise la mémoire de travail, et écrit l'adresse IP par défaut stockée dans le deuxième dispositif de stockage (7) à la mémoire non volatile (6) en tant que l'adresse IP de l'adaptateur de réseau local (100), ensuite l'unité de commande (4) écrit le contenu de la mémoire non volatile dans la mémoire de travail (5).

3. Adaptateur de réseau local (100) selon la revendication 1, dans lequel le premier dispositif de stockage comprend une mémoire de travail (5) et une mémoire non volatile (6), et
lorsque le détecteur de connexion (14) détermine qu'il y a un dispositif sur le réseau local connecté logiquement à l'adaptateur de réseau local (100), l'unité de commande (4) initialise la mémoire de travail, et écrit le contenu de la mémoire non volatile (6) dans la mémoire de travail (5).

4. Adaptateur de réseau local (100) selon la revendication 3, dans lequel l'adaptateur de réseau local (100) comprend en plus un moyen de réinitialisation (10), et
lorsque le moyen de réinitialisation (10) est exploité, il initialise la mémoire de travail (5), et écrit le contenu de la mémoire non volatile (6) dans la mémoire de travail (5).

5. Adaptateur de réseau local (100) selon la revendication 1, dans lequel le deuxième dispositif de stockage (7) est une ROM.

6. Adaptateur de réseau local (100) selon la revendication 1, dans lequel l'adaptateur de réseau local (100) comprend en plus:
un port de réseau local (1) pour connecter l'adaptateur de réseau local (100) à un réseau local;
un moyen de gestion (3) pour acquérir et gérer une information de réseau local à travers le port de réseau local (1); et
un moyen d'entrée/de sortie (12) pour connecter l'adaptateur de réseau local à l'appareil d'information (101).

7. Appareil d'information (101) connecté à un réseau local, comprenant:
un premier dispositif de stockage (5, 6) pour stocker une adresse IP qui est utilisée par l'appareil d'information actif (101) attaché au réseau local;
un deuxième dispositif de stockage (7) pour stocker une adresse IP par défaut pour l'appareil d'information (101);
une unité de commande d'initialisation d'adresse IP (15) pour commander localement une initialisation de l'adresse IP de l'appareil d'information (101), l'appareil d'information (101) étant **caractérisé par**:
un détecteur de connexion (14) pour détecter s'il y a un dispositif sur le réseau local connecté logiquement à l'appareil d'information (101) en réponse à un ordre depuis l'unité de commande d'initialisation d'adresse IP (15);
un moyen d'initialisation d'adresse IP (13) pour initialiser l'adresse IP de l'appareil d'information (101) selon la connexion détectée par le détecteur de connexion (14); et
une unité de commande (4) pour écrire l'adresse IP par défaut stockée dans le deuxième dispositif de stockage (7) dans le premier dispositif de stockage (5, 6) en tant que l'adresse IP de l'appareil d'information, lorsque le détecteur de connexion (14) détermine qu'il n'y a aucun dispositif sur le réseau local connecté logiquement à l'appareil d'information (101), et pour commander le premier dispositif de stockage (5, 6) et le deuxième dispositif de stockage (7).

8. Procédé pour initialiser une adresse IP d'un adaptateur de réseau local (100) connectant un appareil d'information à un réseau local, **caractérisé par** les étapes de:
stocker une adresse IP qui est utilisée par l'adaptateur de réseau local actif (100) attaché au réseau local dans un premier dispositif de stockage (5, 6) du côté de l'adaptateur de réseau local (100),
stocker une adresse IP par défaut pour l'adaptateur de réseau local (100) dans un deuxième dispositif de stockage (7) du côté de l'adaptateur de réseau local (100),
ordonner localement (S5) une initialisation de l'adresse IP de l'adaptateur de réseau local (100);
déterminer (S6) en réponse audit ordre s'il y a un dispositif connecté logiquement à l'adaptateur de réseau local (100) sur le réseau local;
initialiser l'adresse IP de l'adaptateur de réseau local (100) selon la connexion déterminée; et
écrire (S8) l'adresse IP par défaut stockée dans le deuxième dispositif de stockage (7) dans leu premier dispositif de stockage (5, 6) en tant que l'adresse IP de l'adaptateur de réseau local (100) lorsqu'il est déterminé qu'il n'y a aucun dispositif connecté logiquement à l'adaptateur de réseau local (100).
